# EUROPÄISCHE PATENTANMELDUNG

(11) **EP 3 989 057 A1**
(43) Veröffentlichungstag der Anmeldung: **27.04.2022**
(21) Anmeldenummer: 20203720.6
(22) Anmeldetag: 23.10.2020
(51) Int. Cl.: G06F 3/16, G10L 15/22, G10L 15/07

(54) **ADAPTIVER SPRACHASSISTENT BEDIENBAR DURCH EINEN NUTZER MITTELS EINES NUTZERENDGERÄTS**

(71) Anmelder: Deutsche Telekom AG, 53113 Bonn (DE)
(72) Erfinder: Minow, Jascha, 64625 Bensheim (DE); Jahn, Carl, 65191 Wiesbaden (DE); El-Mallouki, Said, 56329 St. Goar (DE); Platschek, Martin Michael, 13347 Berlin (DE)
(74) Vertreter: Braun-Dullaeus Pannen Emmerling Patent- & Rechtsanwaltspartnerschaft mbB

(57) **Zusammenfassung**

Die Erfindung betrifft Techniken zur Nutzung eines Sprachassistenten, wobei der Sprachassistent mittels eines Nutzerendgeräts von einem Nutzer bedient wird, wobei das Verfahren folgende Schritte aufweist:
• Aufnehmen eines Audiosignals des Nutzers durch ein Mikrofon des Nutzerendgeräts;
• Umwandeln des Audiosignals in Textelemente;
• Analysieren der Textelemente im Hinblick auf für den Sprachassistenten vorgesehene Befehle und/oder im Hinblick auf Kontextinformationen;
• Ausführen der Befehle, insbesondere unter Berücksichtigung der Kontextinformationen,
wobei das Umwandeln und/oder das Analysieren von einem auf einem Prozessor implementierten Modell ausgeführt wird, wobei das Modell als ein virtueller Nutzer eingerichtet ist.

## Beschreibung

Die Erfindung betrifft ein Verfahren zur Nutzung eines Sprachassistenten durch einen Nutzer mittels eines Nutzerendgeräts. Ferner betrifft die Erfindung ein für das Verfahren eingerichtetes Nutzerendgerät sowie einen für das Verfahren eingerichteten Server eines Serviceproviders in einem Netzwerk.

Virtuelle Assistenten und insbesondere virtuelle Sprachassistenten verbreiten sich immer weiter in vielen Gebieten der Technik und nehmen in dem täglichen Leben der Menschen eine immer größere Rolle ein. Konnten diese virtuellen Assistenten zu anfangs beispielsweise Erinnerungen für Nutzer erfassen oder eine Einkaufsliste für den nächsten Einkauf mithilfe von Sprachbefehlen erstellen, so sind inzwischen die Bedürfnisse der Nutzer an die Sprachassistenten deutlich gestiegen. Inzwischen fokussieren sich Entwickler der virtuellen Assistenten auf die persönlichen Bedürfnisse der Nutzer und versuchen die Assistenten an die spezifischen Vorlieben der Nutzer anzupassen. Durch eine Auswertung des Nutzerverhaltens versuchen die Entwickler beispielsweise die Gestaltung von Antworten oder persönliche Vorschläge, die der virtuelle Assistent ausgibt, auf den Nutzer anzupassen. Um dies zu ermöglichen besitzen die virtuellen Assistenten verschiedene Skills, bzw. bieten verschiedene Services an. Um diese Skills zu individualisieren werden an unterschiedlichsten Stellen Daten aus dem Kontext des Nutzers benötigt, um das Nutzererlebnis optimal individuell zu gestalten. Für den Abruf und das Vorhalten dieser Daten sind die verschiedenen Skills und/oder Services in der Regel selbst "verantwortlich". Diese "Eigenständigkeit" der Skills kann daraus resultieren, dass diese beispielsweise durch verschiedene voneinander unabhängige Servicedienstleister implementiert werden können. Beispielsweise kann ein erster Skill die Abfrage einer Wettervorhersage betreffen und ein zweiter Skill die Bedienung einer Waschmaschine in einer Smart-Home Umgebung. Der erste Skill kann beispielsweise von einem Wetterdienst und der zweite Skill von einem Gerätehersteller für Waschmaschinen bereitgestellt werden.

In der heutigen Praxis ist es durchaus schon möglich, dass der virtuelle Assistent auf die individuellen Bedürfnisse eines Nutzers eingehen kann und auch auf entsprechende Kontextdaten des Nutzers zurückgreift. Da aber die Skills eines virtuellen Assistenten, wie vorstehend beschrieben, selbst für den Abruf das Vorhalten dieser Daten verantwortlich sind, kommt es durch die verteilten Verantwortlichkeiten und Datenhaltung nachteilig zu Redundanzen, Laufzeitverlängerung sowie erheblichem Aufwand bei der Umsetzung der Datenschutz-Grundverordnung: DSGVO. So sind beispielsweise die Zugriffe auf die Daten zu begrenzen, die Lebensdauer der Daten sowie gegebenenfalls die Speicherung der Daten einzuschränken und eine Möglichkeit zur Datenauskunft umzusetzen. Weiterhin stehen den einzelnen Skills bzw. Services nicht alle Informationen der anderen Skills bzw. Services zur Verfügung, die eine bessere Anpassung des virtuellen Assistenten an den Nutzer ermöglichen.

Zudem ist es beschwerlich, dass ein Nutzer Sprachbefehle in einem vordefinierten Schema absetzen muss, wobei zusätzlich die Aussprache des Nutzers von dem virtuellen Assistenten verstanden werden muss. Dies ist nachteilig beispielsweise bei Sprachfehlern oder Dialekten nicht immer der Fall. Hierdurch haben Nutzer mit Akzenten, Dialekten oder Sprachbehinderungen Schwierigkeiten mit dem virtuellen Assistenten zu kommunizieren. Weiterhin wünschen sich viele Nutzer, ihre Befehle selbst konfigurieren zu können, sodass gewünschte Aktionen ausgeführt werden. Dieses reaktive Verhalten des virtuellen Assistenten geht über einfache "Frage-Antwort- Paare" hinaus, sondern benötigt vielmehr die Berücksichtigung der individuellen Sprache und Sprechweise eines jeden Nutzers.

In diesem Zusammenhang beschreibt die US 2020/0184967 A1 Techniken, um ein "Wakeword" oder mehrere "Wakewords" zuverlässig zu bestimmen und an den hierfür vorgesehenen Skill weiterleiten zu können. So beschreibt die Offenbarung der US 2020/0184967 A1 das verschiedene Skills unterschiedliche "Wakewords" haben können, wobei das Sprachverarbeitungssystem bei der Bearbeitung der Sprachbefehle auch Nutzerkontext-Informationen, wie etwa die Historiedaten, berücksichtigen kann, wobei die Nutzerkontext-Informationen in einer Datenbank vorgehalten werden. Gerade die Verwendung von Historiedaten kann insbesondere dann Probleme bereiten, wenn sich die einzelnen Einträge gegenseitig widersprechen.

Es ist die Aufgabe der Erfindung, ein Verfahren, ein Nutzerendgerät sowie einen Server anzugeben, die eine effiziente Anpassung eines virtuellen Assistenten an einen Nutzer ermöglichen.

Gelöst wird diese Aufgabe mit den Merkmalen der unabhängigen Ansprüche.

Die Merkmale der im Folgenden beschriebenen verschiedenen Aspekte der Erfindung bzw. der verschiedenen Ausführungsbeispiele sind miteinander kombinierbar, sofern dies nicht explizit ausgeschlossen ist oder sich technisch zwingend ausschließt.

Erfindungsgemäß ist ein Verfahren zur Nutzung eines Sprachassistenten angegeben, wobei der Sprachassistent vermittels eines Nutzerendgeräts von einem Nutzer bedient wird, wobei das Verfahren folgende Schritte aufweist:
- Aufnehmen eines Audiosignals des Nutzers durch ein Mikrofon des Nutzerendgeräts. Bei dem Audiosignal handelt es sich um Sprache, die der Nutzer spricht. Diese kann mit bekannten Methoden aus den normalen Umgebungsgeräuschen herausgefiltert werden;
- Umwandeln des Audiosignals in Textelemente. Dieser Schritt hat den Vorteil, dass auch verschiedene Aussprachevarianten ein und desselben Wortes effektiv in ein einziges Textelement, nämlich das entsprechende Wort, zusammengeführt werden können;
- Analysieren der Textelemente im Hinblick auf für den Sprachassistenten vorgesehene Befehle und/oder im Hinblick auf Kontextinformationen;
- Ausführen der Befehle, insbesondere unter Berücksichtigung der Kontextinformationen. Das Ausführen der Befehle kann beispielsweise eine Antwort in Form einer Sprachnachricht umfassen und/oder Anweisungen an andere Geräte in einer Smart-Home-Umgebung.

Es ist der Kern der Erfindung, dass das Umwandeln und/oder das Analysieren von einem auf einem Prozessor implementierten Modell ausgeführt wird, wobei das Modell als ein virtueller Nutzer eingerichtet ist. Hierbei repräsentiert der virtuelle Nutzer quasi Eigenschaften, Vorlieben, Charakter und dergleichen des "realen" Nutzers. Beim Auswerten, respektive beim Analysieren der Textelemente durch die verschiedenen Skills, können diese quasi mit dem virtuellen Nutzer kommunizieren und dadurch erkennen, wie das Ausführen der Befehle individuell am besten auf den realen Nutzer zugeschnitten werden kann. Die Implementierung des virtuellen Nutzers in Form eines Modells anstatt der bloßen Hinterlegung von Historie-Daten, also Daten einer Nutzungsvorgeschichte, bietet den Vorteil, dass das Modell des virtuellen Nutzers viel flexibler ist und sich durch ein dynamisches Adaptieren immer besser auf den realen Nutzer anpassen kann. Eine Datenbank mit Historie-Daten ist zudem weniger gut, um die wirklichen Vorlieben des Nutzers zuverlässig zu extrahieren. Fragt beispielsweise der realen Nutzer regelmäßig nach den Fußballergebnissen der Mannschaft FC Bayern München, dann wird somit der virtuelle Nutzer durch die Anpassung des Modells "Fan" des FC Bayern München. Fragt der Nutzer dann also beispielsweise den Sprachassistenten "Sag mir das gestrige Fußballergebnis". Kann dieser automatisiert antworten "der FC Bayern hat 8:2 gegen den FC Barcelona gewonnen". Fragt der Nutzer dann aber beispielsweise ein einziges Mal, wie Eintracht Frankfurt gespielt hat, wird diese einmalige Anfrage den "Charakter" des virtuellen Nutzers noch nicht verändern und der FC Bayern wird weiterhin Lieblingsmannschaft des virtuellen Nutzers bleiben. Werden dieselben Abfragen allerdings in bloßen Historie-Daten hinterlegt, könnte ein Sprachassistent hieraus den Schluss ziehen, dass der Nutzer wegen seiner letzten Anfrage Eintracht Frankfurt Fan ist.

Bevorzugt greifen verschiedene von dem Sprachassistenten ausführbare Skills auf das Modell des virtuellen Nutzers zurück. Insbesondere greifen die Skills bei der Umwandlung, Analyse und/oder bei der Ausführung der Befehle auf den virtuellen Nutzer zurück. Hierdurch wird ermöglicht, dass der individuelle Nutzerkontext - in Form des virtuellen Nutzers - allen Skills, also mithin der gesamten Verarbeitungskette, zentral und global zur Verfügung steht. Dies verbessert die Ressourcennutzung des Sprachassistenten, verringert Laufzeiten, reduziert Redundanzen und vereinfacht die Einhaltung und Umsetzung der DSGVO.

In einer Ausführungsform ist das Modell des virtuellen Nutzers als ein Deep-Neural-Network "DNN" implementiert. Ein solches neuronales Netzwerk basiert auf der Verknüpfung von Neuronen zwischen mehreren Schichten und ist besonders gut geeignet menschliche Charaktereigenschaften nachzubilden. Bei dem Trainieren eines solchen Modells werden Gewichtungsfaktoren, die Neuronen der verschiedenen Schichten miteinander verknüpfen ständig adjustiert, sodass sich das neuronale Netzwerk immer mehr an die tatsächlichen Eigenschaften des realen Nutzers anpasst. Nach außen hin ist lediglich eine Eingabe- und eine Ausgabeschicht sichtbar. An die Eingabeschicht wird dann das Audiosignal übergeben, wobei die Analyse quasi selbstständig durch das trainierte neuronale Netz vorgenommen wird. Das Ergebnis wird dann durch die Ausgabeschicht bereitgestellt.

Für konventionelle Computerprogramme ist es schwierig, die Bedeutung von rohen sensorischen Eingangsdaten zu verstehen, wie beispielsweise in der Handschrifterkennung, wo ein Text zunächst nur als eine Sammlung von Bildpunkten existiert. Die Überführung einer Menge von Bildpunkten in eine Kette von Ziffern und Buchstaben ist sehr kompliziert. Komplexe Muster müssen aus Rohdaten extrahiert werden. Das Lernen oder Auswerten dieser Zuordnung scheint unüberwindbar schwierig, wenn sie manuell programmiert werden würde. Eine der häufigsten Techniken in der künstlichen Intelligenz ist maschinelles Lernen. Maschinelles Lernen ist ein selbstadaptiver Algorithmus. Deep Learning, eine Teilmenge des maschinellen Lernens, nutzt eine Reihe hierarchischer Schichten bzw. eine Hierarchie von Konzepten, um den Prozess des maschinellen Lernens durchzuführen. Die hierbei benutzten künstlichen neuronalen Netze sind wie das menschliche Gehirn gebaut, wobei die Neuronen wie ein Netz miteinander verbunden sind. Die erste Schicht des neuronalen Netzes, der sichtbaren Eingangsschicht, verarbeitet eine Rohdateneingabe, wie beispielsweise die einzelnen Pixel eines Bildes. Die Dateneingabe enthält Variablen, die der Beobachtung zugänglich sind, daher "sichtbare Schicht".

Diese erste Schicht leitet ihre Ausgaben an die nächste Schicht weiter. Diese zweite Schicht verarbeitet die Informationen der vorherigen Schicht und gibt das Ergebnis ebenfalls weiter. Die nächste Schicht nimmt die Informationen der zweiten Schicht entgegen und verarbeitet sie weiter. Diese Schichten werden als versteckte Ebenen (englisch hidden layers) bezeichnet. Die in ihnen enthaltenen Merkmale werden zunehmend abstrakt. Ihre Werte sind nicht in den Ursprungsdaten angegeben. Stattdessen muss das Modell bestimmen, welche Konzepte für die Erklärung der Beziehungen in den beobachteten Daten nützlich sind. Dies geht über alle Ebenen des künstlichen neuronalen Netzes so weiter.

Das Ergebnis wird in der sichtbaren letzten Schicht ausgegeben. Hierdurch wird die gewünschte komplizierte Datenverarbeitung in eine Reihe von verschachtelten einfachen Zuordnungen unterteilt, die jeweils durch eine andere Schicht des Modells beschrieben werden.

In einer bevorzugten Ausführungsform greift das Modell des virtuellen Nutzers auf eine Datenbank mit Nutzerinformation insbesondere Historie-Daten, zurückgreift. Auf diese Daten kann im Bedarfsfall sowohl bei den Verfahrensschritten der Umwandlung, der Analyse und/oder der Ausführung zurückgegriffen werden. Insbesondere können die Nutzerinformationen aber verwendet werden, um das Modell des virtuellen Nutzers effizient im Hinblick auf den realen Nutzer zu trainieren und an diesen anzupassen.

Vorzugsweise berücksichtigt das "DNN" die spezifischen Nutzerinformationen durch eine Anpassung der Verbindungen, insbesondere deren Gewichtungen, zwischen den Neuronen der verschiedenen Schichten dynamisch. Ist das Modell des virtuellen Nutzers erstellt, können die zugrundeliegenden Nutzerinformationen prinzipiell gelöscht werden, da alle Eigenschaften des Nutzers in das neuronale Netzwerk adaptiert wurden. Auf diese Weise ist eine Möglichkeit geschaffen, dem Datenschutz auf herausragende Weise gerecht zu werden, da nach außen hin nur noch der virtuelle Nutzer sichtbar ist und alle "initialen" Nutzerinformationen gelöscht wurden. Übrig bleibt also nur noch gewissermaßen der Charakter des virtuellen Nutzers.

In einem Ausführungsbeispiel wird das Modell des virtuellen Nutzers durch Nutzerfeedback angepasst, respektive trainiert. Dies ist ein effektiver Weg um zu gewährleisten, dass sich der virtuelle Nutzer stetig dem realen Nutzer angleicht. Das Nutzerfeedback kann auf einer audiobasierten Interaktion des Nutzers mit dem Sprachassistenten beruhen. Der Sprachassistent kann beispielsweise den von ihm extrahierten Befehl bzw. die Anweisung wiedergeben, indem der Sprachassistent beispielsweise durch einen Lautsprecher des Nutzerendgeräts sagt "Meinten Sie, Sie wollen einen Wetterbericht für den morgigen Tag?" Wenn der Nutzer dies durch ein "Ja" bestätigt wird dies als positives Feedback gewertet, wohin ein "Nein" einem negativen Feedback entspricht. Das Modell kann durch die Feedbacks weiter angepasst werden. Hierbei wählt das Modell denjenigen Befehl bzw. diejenige Anweisung zuerst aus, die mit der größten Wahrscheinlichkeit einer Übereinstimmung in dem Audiosignal des Nutzers repräsentiert ist. Beantwortet der Nutzer die Frage mit "Nein", so kann der Nutzer gebeten werden die Frage neu zu formulieren und/oder es wird derjenige Befehl bzw. diejenige Anweisung mit der zweitgrößten Wahrscheinlichkeit einer Übereinstimmung in dem Audiosignal des Nutzers ermittelt, ausgeführt und/oder wiedergegeben. Dieser Prozess wird so lange fortgeführt, bis der Nutzer ein positives Nutzerfeedback gibt. Dieses Verfahren hat auch den Vorteil, dass auch für Menschen mit einem Akzent oder einer Sprachsteuerung Befehle bzw. Anweisungen so lange wiedergegeben werden bis schließlich der beabsichtigte Befehl und/oder die beabsichtigte Anweisung wiedergegeben wird.

Besonders bevorzugt basiert das Nutzerfeedback auf einer textbasierten Interaktion. Hier kann der Nutzer eindeutig durch ein Eingabemittel, bevorzugt auf dem Nutzerendgerät, spezifizieren, welche Anweisung seinem Audiosignal entspricht. Dies ist demnach eine Möglichkeit, dass der User sein eigenes Audiosignal transkribiert. Dies ermöglicht ein effektives Anpassen des virtuellen Nutzers auf die Aussprache des realen Nutzers.

In einer Ausführungsform wird das Modell des virtuellen Nutzers durch einen Service-Provider, insbesondere den Anbieter des Sprachassistenten, angepasst. Beispielsweise kann der Service-Provider verschiedene Sprachdatenbanken (regionale Sprachdatenbank) vorhalten, die eine Aussprache berücksichtigen, die typisch für eine bestimmte Region ist. Über das Nutzerendgerät, beispielsweise über ein GPS Modul oder über die IP-Adresse kann bestimmt werden in welcher Region sich der Nutzer aufhält und somit geschlussfolgert werden, welchen Dialekt er mit einer hohen Wahrscheinlichkeit spricht. Diese regionale Sprachdatenbank kann dann dem virtuellen Nutzer hinzugefügt werden.

In einer bevorzugten Ausführungsform ist das Modell des virtuellen Nutzers auf dem Prozessor des Nutzerendgeräts implementiert. Dadurch, dass das Computermodell des virtuellen Nutzers weniger Speicherplatz benötigt als herkömmliche Datenbanken kann es effektiv auf dem Prozessor des Nutzerendgeräts implementiert werden. Sind für das Training des Modells des virtuellen Nutzers umfangreiche Datenbanken notwendig, so kann das Training auf einem Server im Internet ausgeführt werden und nach Fertigstellung kann das Modell des virtuellen Nutzers auf das Nutzerendgerät zur Installation übertragen werden. Dies bietet den Vorteil, dass der Datenverkehr hierdurch effizient reduziert wird.

Bevorzugt ist das Nutzerendgerät über den der Sprachassistent bedient wird über ein Netzwerk, insbesondere dem Internet, mit einem Server eines Service-Providers verbunden, wobei das Modell des virtuellen Nutzers auf dem Server des Service-Providers implementiert ist. Über das Netzwerk und entsprechende Schnittstellen können das Nutzerendgerät und der Server miteinander Daten austauschen. Dies bietet den Vorteil, dass die Aufgaben des Sprachassistenten, respektive des virtuellen Nutzers, von dem Nutzerendgerät auf den Server ausgelagert werden können. Dies kann mehrere Vorteile haben. Zum einen ist es einfacher Software, als auch den virtuellen Nutzer, auf einem zentralen Server aktuell zu halten und quasi jeweils die neueste Versionsnummer aufzuspielen. Zum anderen können insbesondere Nutzerendgeräte, wie etwa Smartphones, Smart-Watches etc., die keine hohe Rechenleistung verfügen oder deren Akkulaufzeit geschont werden soll, die Berechnungsaufgaben des virtuellen Nutzers effektiv zur Ressourcenschonung auf den Server auslagern. Ein weiterer Vorteil ist es, dass man mit mehreren Nutzerendgeräten zentral auf denselben virtuellen Nutzer zugreifen kann und diesen nicht für jedes einzelne Nutzerendgerät extra mühsam auf den realen Nutzer anpassen muss.

Gemäß einem zweiten Aspekt der Erfindung ist ein Nutzerendgerät zur Nutzung eines Sprachassistenten angegeben, wobei das Nutzerendgerät aufweist:
ein Mikrofon zur Aufnahme von Audiosignalen, insbesondere von Sprache, eines Nutzers,
eine Recheneinheit, insbesondere ein Prozessor, zur Ausführung von Rechnungen und zur Implementierung eines Modells eines virtuellen Nutzers, wobei das Nutzerendgerät zur Ausführung eines der vorstehenden Verfahren eingerichtet ist.

Bei dem Nutzerendgerät kann es sich um ein Smartphone, eine Smart-Watch, einen intelligenten Lautsprecher, ein Tablet, eine Nutzer-Kommunikationsschnittstelle in einem Auto o. ä. handeln. Die Vorteile, die durch das entsprechend eingerichtete Nutzerendgerät erzielt werden können, sind im Wesentlichen analog zu den Vorteilen des Verfahrens.

Gemäß einem dritten Aspekt der Erfindung ist ein Server zur Ausführung eines Sprachassistenten der von einem Nutzerendgerät angefordert wird angegeben, wobei der Server aufweist:
eine Schnittstelle zu einem Netzwerk, insbesondere zum Internet, zum Empfangen von Daten, insbesondere von Audiosignalen, des Nutzerendgeräts;
ein Prozessor zur Ausführung von Rechnungen und zur Implementierung eines Modells eines virtuellen Nutzers, wobei der Server zur Ausführung folgender Schritte eingerichtet ist:
   - Empfangen eines von dem Nutzerendgerät übermittelten Audiosignals;
   - Umwandeln des Audiosignals in Textelemente;
   - Analysieren der Textelemente im Hinblick auf für den Sprachassistenten vorgesehene Befehle und/oder Kontextinformationen;
   - Ausführen der Befehle insbesondere unter Berücksichtigung der Kontextinformationen,
wobei das Umwandeln und/oder das Analysieren von einem auf dem Prozessor implementierten Modell ausgeführt wird, wobei das Modell als ein virtueller Nutzer eingerichtet ist. In diesem Fall werden also wesentliche Schritte des vorstehend beschriebenen Verfahrens, insbesondere das Umwandeln des Audiosignals, das Analysieren der Textelemente und das Ausführen der Befehle von dem auf dem virtuellen Server implementierten virtuellen Nutzer ausgeführt. Dadurch, dass das Verfahren, bzw. wesentliche Schritte des Verfahrens, auf dem Server durchgeführt wird, werden Ressourcen der Nutzerendgeräte effektiv geschont. Zugleich können mehrere Nutzerendgeräte gemeinsam auf das zentral auf dem Server hinterlegte Modell des virtuellen Nutzers zurückgreifen.

Im Folgenden werden bevorzugte Ausführungsbeispiele der vorliegenden Erfindung unter Bezugnahme auf die begleitende Figur erläutert:
- Fig. 1:: zeigt schematisch einen virtuellen Sprachassistenten mit einem Modell eines virtuellen Nutzers.
- Fig. 2:: zeigt den Workflow bei der Nutzung des virtuellen Sprachassistenten durch einen Nutzer.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

Die erfindungsgemäße Lösung basiert also auf der Idee einer Kombination eines Zwischenspeichers für nutzerbezogene Daten mit der Analyse und der modellbasierten Auswertung dieser Daten, um das Verhalten eines Nutzers optimal vorherzusagen. Hierbei realisiert ein Modell eines virtuellen Nutzers die modellbasierte Auswertung zentral für verschiedene Skills eines Sprachassistenten. Der virtuelle Nutzer wird durch Daten erzeugt, die auf dem Verhalten des Nutzers basieren. Der virtuelle Nutzer kann auch von Drittservices verwendet werden, um nutzerbezogene Informationen abzurufen bzw. Nutzerreaktionen vorherzusehen. Es ist möglich, dass der Nutzer die hierfür nötigen Anpassungen selbst an dem virtuellen Nutzer vornimmt. Der virtuelle Nutzer wird, wie schon vorstehend erwähnt, als zentrale Infrastruktur-Komponente umgesetzt, die für alle relevanten Ereignisse bzw. Anforderungen im Rahmen der Nutzung durch den jeweiligen Nutzer von den verschiedenen Skills verwendet wird. Hierzu kann der zentrale virtuelle Nutzer auch auf entsprechende in einem Speicher vorgehaltene Daten zurückgreifen.

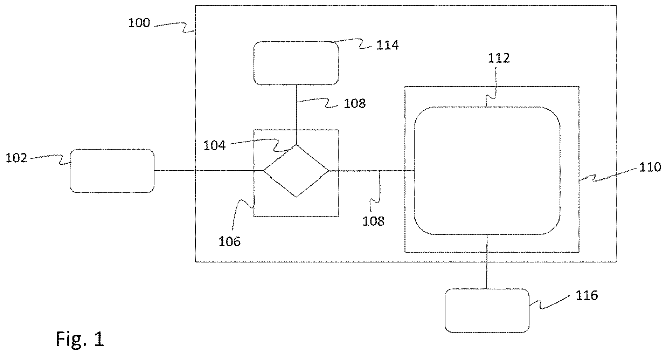

Fig. 1 zeigt schematisch einen virtuellen Sprachassistenten 100 mit einem Modell eines virtuellen Nutzers 112. Ein nicht gezeigter Nutzer kann einen Sprachbefehl in Form eines Audiosignals 102 abgeben. Das Audiosignal 102 wird von einem Sprachinterface 104 eines Nutzerendgeräts 106 empfangen. Nach einer ersten Bearbeitung des Audiosignals 102 durch das Nutzerendgerät 106 oder noch vor einer ersten Bearbeitung des Audiosignals 102 durch das Nutzerendgerät 106 wird das Audiosignale 102 über ein Netzwerk 108, insbesondere das Internet 108, an einen Server 110 übertragen. Hierzu weist der Server 110 ebenfalls eine entsprechende Netzwerkschnittstelle zum empfangen und senden der Daten aus Netzwerk 108 auf. Auf dem Server 110 ist das Modell des virtuellen Nutzers 112 implementiert, wobei der virtuelle Nutzer unter zwölf das Audiosignal 102 nutzerspezifisch umwandelt, analysiert und entsprechende Befehle ausführt. Hierzu kann das Modell des virtuellen Nutzers 112 verschiedene Module aufweisen: ein kundenspezifisches ASR-Modul, ein kundenspezifisches NLU-Modul, eine Verwendungsvorhersagen-Modul, ein Regelwerk-Modul und ein Modul für einen sicheren Zugang. Über das Netzwerk 108 kann das Sprachinterface 104 auch mit anderen externen Cloud-Services 114 kommunizieren. Das Modell des virtuellen Nutzers 112 steht in einer Kommunikationsverbindung mit einem Nutzerspezifischen-Modul 116. Dieses Nutzerspezifische-Modul 116 wird verwendet, um das Modell des virtuellen Nutzers 112 auf den jeweiligen realen Nutzer in spezifisch anzupassen, respektive zu trainieren.

Sprachassistenten basieren meist auf einem ähnlichen technischen Workflow, um den "technischen" Befehl aus einem Sprachbefehl zu extrahieren:
1. Umwandeln von Sprache, also des Audiosignals 102, in Text durch "Speech-to-Text- Erkennung";
2. Extrahieren der benötigten Informationen für die Kategorisierung des Befehls in die entsprechende Domain, Entity, Intent... ;
3. Ausführen des Befehls;
4. Rückgabe der Antwort an den Nutzer.

Ausführungsereignisse wie das Erkennen eines entsprechenden "Wakeword" zum Aktivieren des virtuellen Sprachassistenten, die Erkennung einer Intention "Intent" des Nutzers, der Zugriff auf Drittsysteme durch einen Nutzerbefehl und weitere Ereignisse werden asynchron an den entsprechenden Service/Skill gesendet. Diese Ereignisse dienen als erweiterter Kontext für die Optimierung des Nutzererlebnisses mit dem virtuellen Sprachassistenten und werden verwendet um auch vorausschauende Anpassungen an der gesamten Workflowkette vorzunehmen.

Die erfindungsgemäße Idee betrifft Aspekte des vorstehend skizzierten Workflows.

Eine mögliche Anpassung zu Punkt 1: Die automatische "Speech-to-Text-Erkennung" wird so erweitert und trainiert, dass auch nicht verständliche Sprachbefehle des Nutzers verstanden werden können. Möglich ist es hierbei auch, dass ein Teil der Komponenten für jeden einzelnen Nutzer speziell anhand seiner bereits getätigten Sprachprofile aktualisiert werden kann.

Eine mögliche Anpassung zu Punkt 2: Sowohl bei der Domain, Intention "Intent" und/oder der Entity kann das System so trainiert werden, dass auch Sprachbefehle verstanden und richtig zu einer Funktion, respektive einem Skill (zum Beispiel Wetter, Radio o. ä.), zugeordnet werden, wenn es zum Beispiel regional unterschiedliche Aussprachen oder Zuordnungen für bestimmte Begriffe gibt. Im hessischen beschreibt zum Beispiel das Wort "Gummern" normale Gewürzgurken und das Wort Teppich bedeutet im südlichen Teil Deutschlands Tagesdecke.

Das Training oder die Erweiterungen können wie folgt realisiert werden:
Für die automatische "Speech-to-Text-Erkennung":
1. Der Nutzer selbst korrigiert bei einem nicht erfolgreichen Sprachbefehl den transkribierten Text des Speech-to-Text-Erkennungs-Moduls.
2. Geschulte Personen können sich nicht erfolgreiche Sprachbefehle anhören und den dazu benötigten transkribierten Text hinzufügen.

Für den Befehl der Kategorisierung:
der Nutzer kann wiederum selbst für einen Sprachbefehl, der nicht richtig ausgeführt wurde, die richtige Aktion festlegen. Der Nutzer kann aber auch den eigentlichen Inhalt und dessen Zuordnung selbst verändern.

Der Prozess des Ladens und Löschen von Daten im Speicher erfolgt hierbei absolut transparent für die fachlichen Services und kontinuierlich im Hintergrund oder durch die Nutzerinteraktion. Daten, die nicht mehr benötigt werden, werden automatisch gelöscht und auf Basis eines Algorithmus werden Daten, die voraussichtlich in einem der folgenden Request benötigt werden, vorgeladen.

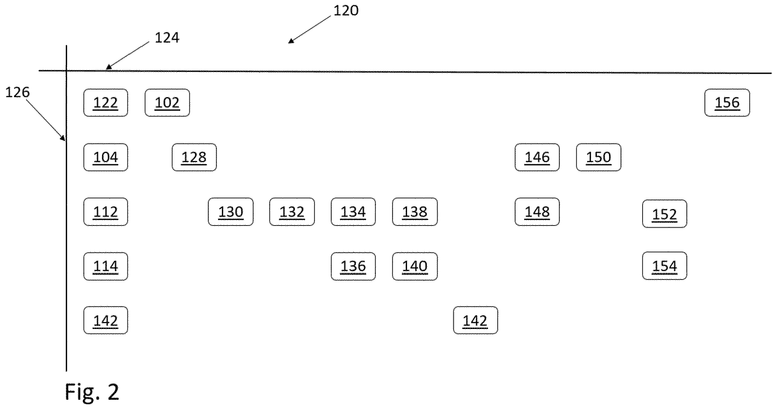

Fig. 2 zeigt den Workflow 120 bei der Nutzung des virtuellen Sprachassistenten 100 durch einen Nutzer 122. Eine horizontale Achse 124 kennzeichnet die Ausführungszeit, wohingegen eine vertikale Achse 126 die jeweiligen Komponenten angibt, die den Workflow zu der jeweiligen Ausführungszeit ausführen.

Der Nutzer 122 sendet seine Anfrage als Audiosignale 102 an den virtuellen Sprachassistenten. Das Sprachinterface 104 beginnt in Schritt 128 mit der Ausführung des Sprachbefehls. Der virtuelle Nutzer 112 unter zwölf überprüft in Schritt 130 den Nutzerstatus und überprüft eventuell vorhandene Updates seines eigenen Modells. Mit seinem Regelwerk Modul löst der virtuelle Nutzer 112 in Schritt 132 die Anfrage des Nutzers 122 auf. Zeitgleich können die Schritte 134 und 136 starten, wobei der Schritt 134 auf dem virtuellen Nutzer 112 ausgeführt wird und das Laden eines nutzerspezifischen ASR-Modells umfasst. Der Schritt 136 kann auf externen Services 114 durchgeführt werden und eine Speech-to-Text-Erkennung umfassen. Ebenfalls parallel können die Schritte 138 und 140 ausgeführt werden. Der Schritt 138 wird von dem virtuellen Nutzer 112 ausgeführt und umfasst das Laden eines nutzerspezifischen NLU-Modells. Der Schritt 140 kann wiederum von einem externen Service 114 ausgeführt werden und umfasst die Auflösung der Intention bzw. der Entität des Sprachbefehls. Hieraufhin kann einen Skill Service 142 Nutzer spezifische Daten für einen später auszuführenden Skill laden. Parallel können die Schritte 146 und 148 ausgeführt werden, wobei das Sprachinterface 104 in Schritt 146 den entsprechenden Skill aufruft und der virtuelle Nutzer unter zwölf in Schritt 148 festlegt welche Skill genutzt werden soll. In Schritt 150 wird durch das Sprachinterface 104 eine Antwort generiert. Als nächstes werden die parallel auszuführenden Schritte 152 und 154 getriggert. Der Schritt 152 läuft wiederum auf dem virtuellen Nutzer 112 ab und umfasst das Laden eines nutzerspezifischen ASR- Antwort-Modells, wohingegen der Schritt 154 die Antwort des Skills von einem Text in eine für den Nutzer verständliche Sprache umwandelt. In Schritt 156 wird dem Nutzer 122 die Antwort auf seine Frage als Audiosignal zurückgegeben.

## Patentansprüche

1. Verfahren zur Nutzung eines Sprachassistenten, wobei der Sprachassistent (100) vermittels eines Nutzerendgeräts (106) von einem Nutzer (122) bedient wird, wobei das Verfahren folgende Schritte aufweist:
• Aufnehmen eines Audiosignals (102) des Nutzers durch ein Mikrofon des Nutzerendgeräts (106);
• Umwandeln des Audiosignals in Textelemente;
• Analysieren der Textelemente im Hinblick auf für den Sprachassistenten (100) vorgesehene Befehle und/oder im Hinblick auf Kontextinformationen;
• Ausführen der Befehle, insbesondere unter Berücksichtigung der Kontextinformationen,
**dadurch gekennzeichnet,**
**dass** das Umwandeln und/oder das Analysieren von einem auf einem Prozessor implementierten Modell (122) ausgeführt wird, wobei das Modell (122) als ein virtueller Nutzer (122) eingerichtet ist.

2. Verfahren nach Anspruch 1, **dadurch gekennzeichnet, dass** verschiedene von dem Sprachassistenten ausführbare Skills und/oder Services auf das Modell des virtuellen Nutzers (122) bei zurückgreifen.

3. Verfahren nach einem der vorhergehenden Ansprüche, **dadurch gekennzeichnet, dass** das Modell des virtuellen Nutzers (122) als deepneural-network "DNN" implementiert ist.

4. Verfahren nach einem der vorhergehenden Ansprüche, **dadurch gekennzeichnet, dass** das Modell des virtuellen Nutzers (122) auf eine Datenbank (116) mit Nutzerinformation zurückgreift.

5. Verfahren nach Anspruch 3, **dadurch gekennzeichnet, dass** das "DNN" die nutzerspezifischen Informationen durch eine Anpassung der Verbindungen zwischen den Neuronen der verschiedenen Schichten dynamisch berücksichtigt.

6. Verfahren nach einem der vorhergehenden Ansprüche, **dadurch gekennzeichnet, dass** das Modell des virtuellen Nutzers durch Nutzerfeedback angepasst wird.

7. Verfahren nach Anspruch 6, **dadurch gekennzeichnet, dass** das Nutzerfeedback auf einer audiobasierten Interaktion basiert.

8. Verfahren nach Anspruch 6 bis 7, **dadurch gekennzeichnet, dass** das Nutzerfeedback auf einer textbasierten Interaktion basiert.

9. Verfahren nach einem der vorhergehenden Ansprüche, **dadurch gekennzeichnet, dass** das Modell des virtuellen Nutzers (122) durch einen Service-Provider, der im Bezug zu dem Sprachassistenten steht, angepasst wird.

10. Verfahren nach einem der vorhergehenden Ansprüche, **dadurch gekennzeichnet, dass** das Modell des virtuellen Nutzers auf dem Prozessor des Nutzerendgeräts (106) implementiert ist.

11. Verfahren nach einem der vorhergehenden Ansprüche, **dadurch gekennzeichnet, dass** das Nutzerendgerät (106) über ein Netzwerk (108), insbesondere dem Internet, mit einem Server (110) eines Service Providers verbunden ist.

12. Verfahren nach Anspruch 11, **dadurch gekennzeichnet, dass** das Modell des virtuellen Nutzers (112) auf dem Server (110) des Service-Providers implementiert ist.

13. Nutzerendgerät zur Nutzung eines Sprachassistenten aufweisend
ein Mikrofon zur Aufnahme von Audiosignalen, insbesondere von Sprache, eines Nutzers,
eine Recheneinheit, insbesondere ein Prozessor, zur Ausführung von Rechnungen und zur Implementierung eines Modells eines virtuellen Nutzers, wobei das Nutzerendgerät eingerichtet ist zur Ausführung eines Verfahrens nach einem der Ansprüche 1-12.

14. Server zur Ausführung eines Sprachassistenten der von einem Nutzerendgerät angefordert wird, aufweisend:
eine Schnittstelle zu einem Netzwerk, insbesondere zum Internet, zum Empfangen von Daten, insbesondere von Audiosignalen, des Nutzerendgeräts;
ein Prozessor zur Ausführung von Rechnungen und zur Implementierung eines Modells eines virtuellen Nutzers, wobei der Server zur Ausführung folgender Schritte eingerichtet ist:
• Empfangen eines von dem Nutzerendgerät übermittelten Audiosignals;
• Umwandeln des Audiosignals in Textelemente;
• Analysieren der Textelemente im Hinblick auf für den Sprachassistenten vorgesehene Befehle und/oder Kontextinformationen;
• Ausführen der Befehle insbesondere unter Berücksichtigung der Kontextinformationen,
**dadurch gekennzeichnet,**
**dass** das Umwandeln und/oder das Analysieren von einem auf dem Prozessor implementierten Modell ausgeführt wird, wobei das Modell als ein virtueller Nutzer eingerichtet ist.

15. Server nach Anspruch 14, **dadurch gekennzeichnet, dass** der Server eingerichtet ist zur Ausführung nach einem der der Verfahren 1 bis 7 und/oder 9 bis 12.

## Geänderte Patentansprüche

### Geänderte Patentansprüche gemäss Regel 137(2) EPÜ.

1. Verfahren zur Nutzung eines Sprachassistenten, wobei der Sprachassistent (100) vermittels eines Nutzerendgeräts (106) von einem Nutzer (122) bedient wird, wobei das Verfahren folgende Schritte aufweist:
• Aufnehmen eines Audiosignals (102) des Nutzers durch ein Mikrofon des Nutzerendgeräts (106);
• Umwandeln des Audiosignals in Textelemente;
• Analysieren der Textelemente im Hinblick auf für den Sprachassistenten (100) vorgesehene Befehle und/oder im Hinblick auf Kontextinformationen;
• Ausführen der Befehle, insbesondere unter Berücksichtigung der Kontextinformationen,
**dadurch gekennzeichnet,**
**dass** das Umwandeln und/oder das Analysieren von einem auf einem Prozessor implementierten Modell (122) ausgeführt wird, wobei das Modell (122) als ein virtueller Nutzer (122) eingerichtet ist, wobei der virtuelle Nutzer Eigenschaften, Vorlieben, Charakter und dergleichen des realen Nutzers repräsentiert.

2. Verfahren nach Anspruch 1, **dadurch gekennzeichnet, dass** verschiedene von dem Sprachassistenten ausführbare Skills und/oder Services auf das Modell des virtuellen Nutzers (122) zurückgreifen.

3. Verfahren nach einem der vorhergehenden Ansprüche, **dadurch gekennzeichnet, dass** das Modell des virtuellen Nutzers (122) als deepneural-network "DNN" implementiert ist.

4. Verfahren nach einem der vorhergehenden Ansprüche, **dadurch gekennzeichnet, dass** das Modell des virtuellen Nutzers (122) auf eine Datenbank (116) mit Nutzerinformation zurückgreift.

5. Verfahren nach Anspruch 3, **dadurch gekennzeichnet, dass** das "DNN" die nutzerspezifischen Informationen durch eine Anpassung der Verbindungen zwischen den Neuronen der verschiedenen Schichten dynamisch berücksichtigt.

6. Verfahren nach einem der vorhergehenden Ansprüche, **dadurch gekennzeichnet, dass** das Modell des virtuellen Nutzers durch Nutzerfeedback angepasst wird.

7. Verfahren nach Anspruch 6, **dadurch gekennzeichnet, dass** das Nutzerfeedback auf einer audiobasierten Interaktion basiert.

8. Verfahren nach Anspruch 6 bis 7, **dadurch gekennzeichnet, dass** das Nutzerfeedback auf einer textbasierten Interaktion basiert.

9. Verfahren nach einem der vorhergehenden Ansprüche, **dadurch gekennzeichnet, dass** das Modell des virtuellen Nutzers (122) durch einen Service-Provider, der im Bezug zu dem Sprachassistenten steht, angepasst wird.

10. Verfahren nach einem der vorhergehenden Ansprüche, **dadurch gekennzeichnet, dass** das Modell des virtuellen Nutzers auf dem Prozessor des Nutzerendgeräts (106) implementiert ist.

11. Verfahren nach einem der vorhergehenden Ansprüche, **dadurch gekennzeichnet, dass** das Nutzerendgerät (106) über ein Netzwerk (108), insbesondere dem Internet, mit einem Server (110) eines Service Providers verbunden ist.

12. Verfahren nach Anspruch 11, **dadurch gekennzeichnet, dass** das Modell des virtuellen Nutzers (112) auf dem Server (110) des Service-Providers implementiert ist.

13. Nutzerendgerät zur Nutzung eines Sprachassistenten aufweisend
ein Mikrofon zur Aufnahme von Audiosignalen, insbesondere von Sprache, eines Nutzers,
eine Recheneinheit, insbesondere ein Prozessor, zur Ausführung von Rechnungen und zur Implementierung eines Modells eines virtuellen Nutzers, wobei das Nutzerendgerät eingerichtet ist zur Ausführung eines Verfahrens nach einem der Ansprüche 1-11.

14. Server zur Ausführung eines Sprachassistenten der von einem Nutzerendgerät angefordert wird, aufweisend:
eine Schnittstelle zu einem Netzwerk, insbesondere zum Internet, zum Empfangen von Daten, insbesondere von Audiosignalen, des Nutzerendgeräts;
ein Prozessor zur Ausführung von Rechnungen und zur Implementierung eines Modells eines virtuellen Nutzers, wobei der Server zur Ausführung folgender Schritte eingerichtet ist:
• Empfangen eines von dem Nutzerendgerät übermittelten Audiosignals;
• Umwandeln des Audiosignals in Textelemente;
• Analysieren der Textelemente im Hinblick auf für den Sprachassistenten vorgesehene Befehle und/oder Kontextinformationen;
• Ausführen der Befehle insbesondere unter Berücksichtigung der Kontextinformationen,
**dadurch gekennzeichnet,**
**dass** das Umwandeln und/oder das Analysieren von einem auf dem Prozessor implementierten Modell ausgeführt wird, wobei das Modell als ein virtueller Nutzer eingerichtet ist.

15. Server nach Anspruch 14, **dadurch gekennzeichnet, dass** der Server eingerichtet ist zur Ausführung nach einem der der Verfahren 1 bis 7 und/oder 12.
